# EUROPÄISCHE PATENTSCHRIFT

(11) **EP 3 659 717 B1**
(45) Veröffentlichungstag und Bekanntmachung des Hinweises auf die Patenterteilung: **28.09.2022**
(21) Anmeldenummer: 19211378.5
(22) Anmeldetag: 26.11.2019
(51) Int. Cl.: B06B 3/02, B23K 20/10, B06B 1/06

(54) **SONOTRODE**
SONOTRODE
SONOTRODE

(30) Priorität: 27.11.2018 DE 102018129912
(43) Veröffentlichungstag der Anmeldung: 03.06.2020
(73) Patentinhaber: MS Ultraschall Technologie GmbH, 78549 Spaichingen (DE)
(72) Erfinder: KELLER, Fabian, 78532 Tuttlingen (DE); KRELL, Volker, 78579 Neuhausen (DE)
(74) Vertreter: Manitz Finsterwald Patent- und Rechtsanwaltspartnerschaft mbB

(56) Entgegenhaltungen:
- EP-A1- 2 362 752
- CH-A- 438 810
- CN-A- 108 787 407
- US-A1- 2009 236 938
- US-A1- 2016 302 816

## Beschreibung

Die vorliegende Erfindung betrifft ein Ultraschall-Schwinggebilde nach dem Oberbegriff des Anspruchs 1. Ein solches Ultraschall-Schwinggebilde ist aus der CH 438 810 A bekannt.

Eine Sonotrode ist aus der DE 44 06 818 C1 bekannt. Bei dieser bekannten Sonotrode ist der Grundkörper als topfförmiger Hohlzylinder ausgebildet und die Schlitze sind als in Seitenansicht linear verlaufende Längsschlitze vorgesehen. Eine derartige Sonotrode kann dazu verwendet werden, eine durch einen Konverter eingeprägte Längsschwingung in eine Torsionsschwingung umzuwandeln. Weitere Sonotroden mit Schlitzen sind aus der EP 2 362 752 A1, der US 2009/236938 A1, der US 2016/302816 A1 oder der CN 108 787 407 A bekannt.

Ausgehend von diesem Stand der Technik ist es die Aufgabe der Erfindung, ein Ultraschall-Schwinggebilde zu schaffen, mit dem eine longitudinale Schwingung effektiver in eine Torsionsschwingung umgewandelt werden kann.

Die Lösung dieser Aufgabe erfolgt durch die Merkmale des Anspruchs 1. Die gekrümmte Formgebung der Schlitze führt dazu, dass sich das zwischen den Schlitzen befindliche Material bei einer Anregung mit Ultraschall sehr stark verformt, wodurch die gewünschte Torsionsschwingung am nicht angeregten Ende der Sonotrode wesentlich effektiver und ausgeprägter erzeugt werden kann. Da die Krümmung in der Mitte eines Schlitzes größer gewählt ist als an den Enden des Schlitzes, wird hierdurch das Drehschwingungsverhalten des Grundkörpers positiv beeinflusst. Die Schlitze könnten grundsätzlich auch als Nuten mit einem Nutengrund ausgebildet sein, erstrecken sich jedoch erfindungsgemäß in Radialrichtung des Grundkörpers so weit, dass diese miteinander in Verbindung stehen. Die Schlitze besitzen zwar jeweils eine Umfangswand, jedoch keinen Boden bzw. Grund.

Vorteilhafte Ausführungsformen der Erfindung sind in der Beschreibung, der Zeichnung sowie den Unteransprüchen beschrieben.

Nach einer vorteilhaften Ausführungsform kann ein zusammenhängender Hohlraum innerhalb eines Vollzylinders ausschließlich durch die Schlitze gebildet sein. Mit anderen Worten kommunizieren die durch die Schlitze gebildeten Hohlräume miteinander, stellen jedoch innerhalb des Vollzylinders einen einzigen, zusammenhängenden Hohlraum dar.

Die Grundform des Grundkörpers kann zumindest abschnittsweise kreiszylindrisch gewählt sein. Es haben sich jedoch auch andere Konturen für den Querschnitt des Zylinders als vorteilhaft herausgestellt. So kann der Querschnitt des Zylinders auch zumindest abschnittsweise polygonal ausgebildet sein, beispielsweise in Form eines Sechsecks, Achtecks oder Vielecks. Auch kommt eine zumindest abschnittsweise quaderförmige Ausbildung des Grundkörpers in Betracht.

Nach einer weiteren vorteilhaften Ausführungsform kann der Grundkörper ein Vollzylinder sein. Durch das Vorsehen der gekrümmten Schlitze konnten trotz der vergleichsweise großen in Drehschwingungen zu versetzenden Masse sehr gute Ergebnisse erzielt werden

Erste Versuche haben gezeigt, dass gute Ergebnisse erzielt werden können, wenn sich die Schlitze in axialer Richtung über nicht mehr als 50%, insbesondere über 25 bis 35%, insbesondere über etwa 5 bis 25%, insbesondere über nicht mehr als 10% der axialen Länge des Grundkörpers erstrecken.

Nach einem weiteren Aspekt der vorliegenden Erfindung betrifft diese eine Ultraschall-Schweißvorrichtung mit einem Konverter und einem Ultraschall-Schwinggebilde der vorstehend beschriebenen Art sowie eine Schweißanlage, umfassend einen Generator und eine solche Ultraschallschweißvorrichtung.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht eines Ultraschall-Schwinggebildes in Form einer Sonotrode;
- Fig. 2: eine Seitenansicht der Sonotrode von Fig. 1;
- Fig. 3: eine Schnittansicht entlang der Linie C-C von Fig. 2; und
- Fig. 4: eine Schnittansicht entlang der Linie B-B von Fig. 2.
- Fig. 5: eine Schnittansicht durch eine weitere Ausführungsform einer Sonotrode;
- Fig. 6: eine Schnittansicht durch eine dritte Ausführungsform einer Sonotrode;
- Fig. 7: eine perspektivische Ansicht eines Ultraschall-Schwinggebildes in Form eines Amplitudentransformationsstücks;
- Fig. 8: eine perspektivische Ansicht eines Ultraschall-Schwinggebildes in Form eines Konverters;

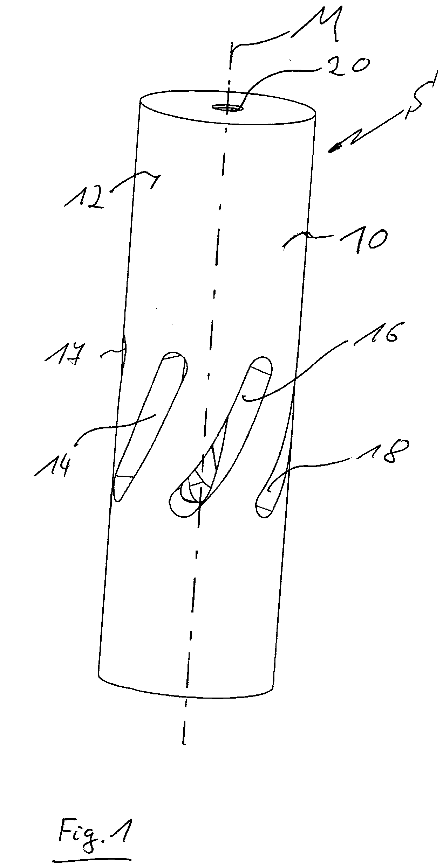

Fig. 1 zeigt ein Ausführungsbeispiel eines Ultraschall-Schwinggebildes in Form einer Sonotrode S. Diese weist als Grundkörper einen zylindrischen Sonotrodenkörper 10 mit einer Mittelachse M und einer Mantelfläche 12 auf, wobei die axiale Länge des Grundkörpers 10 etwa das Dreifache seines Durchmessers beträgt. In dem kreiszylindrischen Grundkörper 10 sind im Bereich der Mantelfläche 12 beim dargestellten Ausführungsbeispiel insgesamt sechs Schlitze 14, 15, 16, 17, 18 und 19 eingebracht, die in einer Seitenansicht auf die Mantelfläche schräg zur Mittelachse M verlaufen. Im Bereich der oberen Stirnfläche des Grundkörpers 10 ist eine Gewindebohrung 20 eingebracht, um den Grundkörper auf bekannte Weise mit einem Konverter, der Ultraschallenergie in den Grundkörper einkoppelt, oder einem Amplitudentransformationsstück zu verbinden.

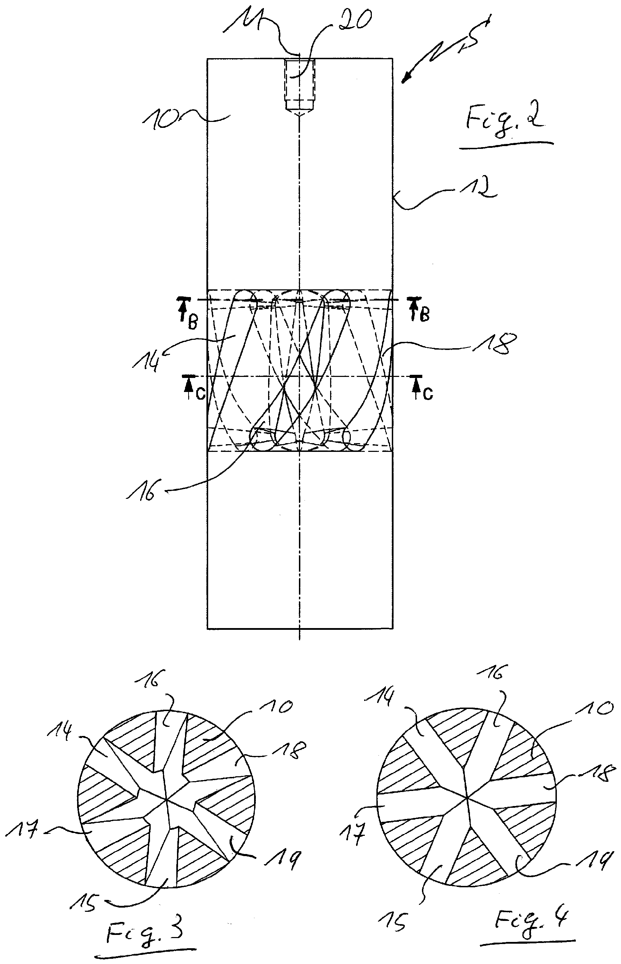

Fig. 2 zeigt eine Seitenansicht der Sonotrode von Fig. 1, wobei gut erkennbar ist, dass die Schlitze 14 bis 19 in ihrer Längserstreckung - gesehen in der Seitenansicht auf die Mantelfläche 12 - nicht geradlinig, sondern gekrümmt verlaufen. Das Gleiche gilt für eine Draufsicht auf eine Abwicklung der Mantelfläche 12 des Grundkörpers 10.

Weiterhin ist aus Fig. 2 zumindest annähernd erkennbar, dass die Krümmung jedes Schlitzes nicht konstant ist, sondern sich entlang der Mittelachse M ändert. So ist die Krümmung bei dem dargestellten Ausführungsbeispiel in der Mitte eines Schlitzes größer als an dessen Enden. Die axiale Erstreckung der Schlitze des dargestellten Ausführungsbeispiels beträgt etwa 30 % der axialen Gesamtlänge des Grundkörpers 10.

Die Fig. 3 und Fig. 4 zeigen jeweils Schnitte entlang der Linie C-C (Fig. 3) und der Linie B-B (Fig. 4) von Fig. 2. Durch diese Schnitte ist besonders gut erkennbar, dass sich die Schlitze in Radialrichtung so weit erstrecken, dass diese miteinander in Verbindung stehen. Obwohl der Grundkörper 10 bei diesem Ausführungsbeispiel nicht als Hohlzylinder sondern als Vollzylinder ausgebildet ist, bilden also sämtliche Schlitze innerhalb des Vollzylinders einen zusammenhängenden Hohlraum.

Wie Fig. 2 ferner verdeutlicht, erstrecken sich die Schlitze in axialer Richtung, d.h. in Richtung der Mittelachse M über etwa 30% der Gesamtlänge des Grundkörpers 10 und die Schlitze sind in Bezug auf die Länge des Grundkörpers 10 außermittig angeordnet.

Nach einer weiteren Ausführungsform kann auch eine ungerade Zahl an Schlitzen vorgesehen werden, beispielsweise fünf oder sieben Schlitze.

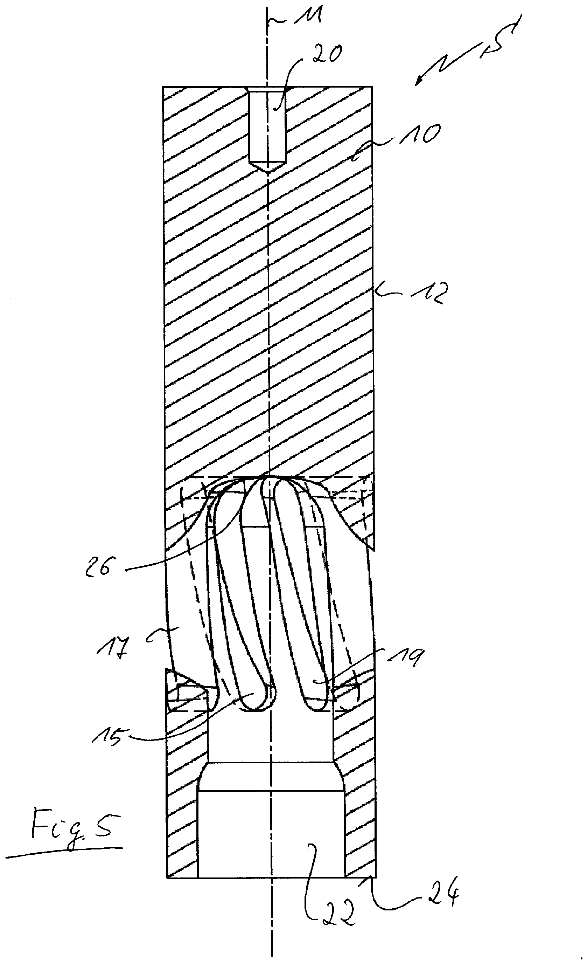

Fig. 5 zeigt eine weitere Ausführungsform einer Sonotrode S, wobei für gleiche Teile und Abschnitte gleiche Bezugszeichen verwendet sind. Die in Fig. 5 im Längsschnitt dargestellte Sonotrode S ist grundsätzlich in gleicher Weise wie die Sonotrode der Fig. 1 bis Fig. 4 aufgebaut. Im Bereich der vorderen Stirnfläche, d.h. der Schweißfläche der Sonotrode, ist jedoch eine zentrale Bohrung 22 eingebracht, so dass die stirnseitige Schweißfläche 24 ringförmig ausgebildet ist. Die Bohrung 22 verjüngt sich im weiteren Verlauf und erstreckt sich bis in den Bereich der Schlitze, wodurch es möglich ist, die "Kuppel" 26 des durch die Schlitze im Inneren des Grundkörpers 10 gebildeten Hohlraums abzukanten und im Wesentlichen frei von Kanten auszubilden.

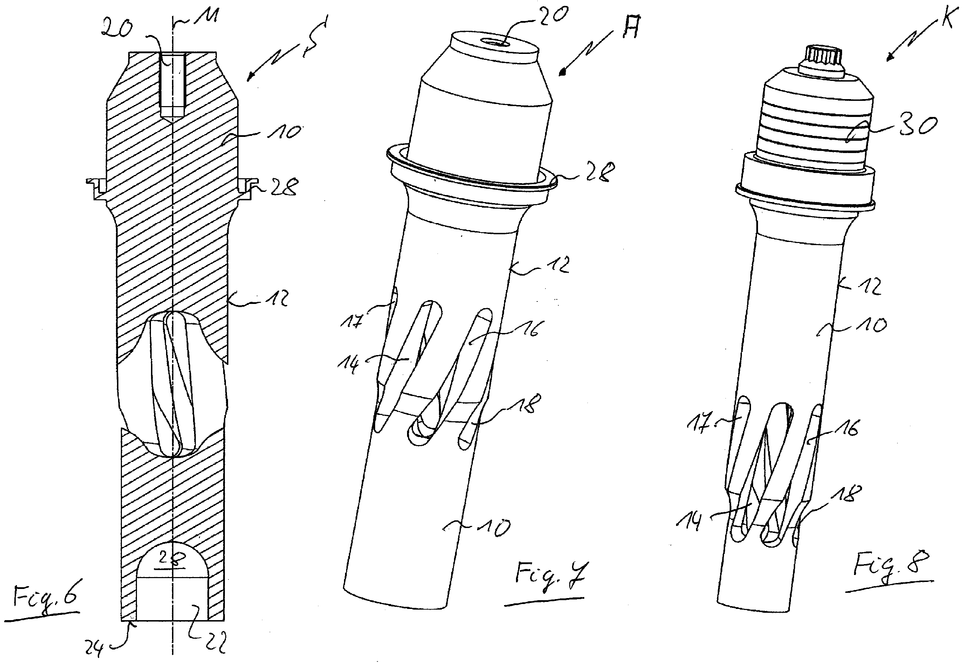

Fig. 6 zeigt eine dritte Ausführungsform einer Sonotrode S, wobei wiederum für gleiche Elemente und Abschnitte gleiche Bezugszeichen verwendet sind. Bei dieser Ausführungsform ist in den vorderen Stirnbereich des Grundkörpers 10 ebenfalls eine Bohrung 22 eingebracht, die in eine halbkugelförmige Kuppel 28 mündet. Allerdings erstreckt sich die Bohrung 22 nicht bis in den Bereich der Schlitze, bildet jedoch wiederum eine ringförmige Schweißfläche 24 aus.

Im Bereich des rückseitigen Endes der Sonotrode ist ein umlaufender Befestigungsflansch 28 angeformt. Die axiale Erstreckung der Schlitze des dargestellten Ausführungsbeispiels beträgt etwa 25 % der axialen Gesamtlänge des Grundkörpers 10.

Fig. 7 zeigt eine perspektivische Ansicht eines Ultraschall-Schwinggebildes in Form eines Amplitudentransformationsstücks A, das zwischen einem Konverter (Fig. 8) und einer Sonotrode angebracht werden kann. Aufgrund der Schlitze 14 bis 19 kann auch ein solches Amplitudentransformationsstück dazu eingesetzt werden, longitudinale Schwingungen in Torsionsschwingungen umzuwandeln. Auch hier kann ein Befestigungsflansch 28 an dem Grundkörper 10 vorgesehen sein. Am rückwärtigen Ende des Grundkörpers 10 ist eine Gewindebohrung 20 zur Verbindung mit einem Konverter vorgesehen. Ebenso befindet sich am vorderen Ende des Grundkörpers 10 mindestens eine (nicht dargestellte) Gewindebohrung oder ein anderes geeignetes Verbindungsmittel zur Verbindung mit einer Sonotrode.

Wie Fig. 7 ferner verdeutlicht, erstrecken sich dort die Schlitze über einen Bereich, in dem sich der Außendurchmesser des Grundkörpers 10 ändert, nämlich von einem kleineren Außendurchmesser im Bereich des in Fig. 7 unteren Endes hin zu einem größeren Außendurchmesser im Bereich des in Fig. 7 oberen Endes.

Fig. 8 zeigt eine perspektivische Ansicht einer weiteren Ausführungsform eines Ultraschall-Schwinggebildes, und zwar in Form eines Konverters K, wobei wiederum für gleiche Elemente gleiche Bezugszeichen verwendet sind. Hierbei sind an dem rückseitigen Ende des Grundkörpers 10 des Konverters K auf bekannte Weise Piezoelemente 30 vorgesehen, mit denen longitudinale Ultraschallschwingungen erzeugt werden, die dann aufgrund der vorgesehenen Schlitze im Bereich des Konverters K in Torsionsschwingungen umgewandelt werden. Die axiale Erstreckung der Schlitze des dargestellten Ausführungsbeispiels beträgt etwa 25 % der axialen Gesamtlänge des Grundkörpers 10. Auch hier kann am vorderen Ende des Grundkörpers 10 mindestens eine Gewindebohrung oder ein anderes geeignetes Verbindungsmittel vorgesehen sein, z.B. zur Herstellung einer formschlüssigen Verbindung.

Wie die Fig. 7 und Fig. 8 zeigen, können sowohl das Amplitudentransformationsstück A wie auch der Konverter K im Bereich ihres unteren Endes einen reduzierten Durchmesser aufweisen.

Mit den erfindungsgemäßen Sonotroden S lässt sich eine Ultraschall-Schweißvorrichtung schaffen, indem am oberen Ende des Sonotrodenkörpers 10 über das Gewinde 20 ein Konverter angebracht wird, der auf bekannte Weise Ultraschallschwingungen erzeugt und diese in die Sonotrode einkoppelt. In gleicher Weise können das erfindungsgemäße Amplitudentransformationsstück A oder der erfindungsgemäße Konverter K mit Schlitzen durch Verbindung mit einer Sonotrode zu einer Schweißvorrichtung zusammengesetzt werden.

Mit einer solchen Ultraschall-Schweißvorrichtung lässt sich eine Schweißanlage schaffen, die aus der vorgenannten Ultraschall-Schweißvorrichtung sowie einem Generator zum Anregen des Konverters besteht. Bei Inbetriebnahme einer solchen Schweißanlage wird der oberhalb der Schlitze befindliche Abschnitt des Grundkörpers in Längsschwingung versetzt, welche wiederum die zwischen den Schlitzen befindlichen Stege wellenartig verformen, so dass der untere Bereich des Grundkörpers 10 in eine Torsionsschwingung um die Achse M versetzt wird, was für verschiedenste Schweißanwendungen von Vorteil ist.

## Patentansprüche

1. Ultraschall-Schwinggebilde (S, A, K), umfassend einen zylindrischen Grundkörper (10) mit einer Mittelachse (M) und einer Mantelfläche (12), in den mehrere Schlitze (14 - 19) eingebracht sind, die in einer Seitenansicht auf die Mantelfläche schräg zur Mittelachse verlaufen, wobei sich die Schlitze (14 - 19) in Radialrichtung des Grundkörpers (10) so weit erstrecken, dass diese miteinander in Verbindung stehen, und die Schlitze (14 - 19) in der Seitenansicht auf die Mantelfläche (12) gekrümmt verlaufen,
**dadurch gekennzeichnet, dass**
die Krümmung nicht konstant und in der Mitte eines Schlitzes (14 - 19) größer ist als an den Enden des Schlitzes.

2. Ultraschall-Schwinggebilde nach zumindest einem der vorstehenden Ansprüche,
**dadurch gekennzeichnet, dass**
der Grundkörper (10) ein Vollzylinder ist.

3. Ultraschall-Schwinggebilde nach Anspruch 2,
**dadurch gekennzeichnet, dass**
ein zusammenhängender Hohlraum innerhalb des Vollzylinders ausschließlich durch die Schlitze (14 - 19) gebildet ist.

4. Ultraschall-Schwinggebilde nach zumindest einem der vorstehenden Ansprüche,
**dadurch gekennzeichnet, dass**
dieses an seinem oberen und/oder unteren Ende einen verringerten Durchmesser aufweist.

5. Ultraschall-Schwinggebilde nach zumindest einem der vorstehenden Ansprüche,
**dadurch gekennzeichnet, dass**
sich die Schlitze (14 - 19) in axialer Richtung über nicht mehr als 50%, insbesondere über 25 bis 35%, insbesondere über etwa 5 bis 25%, insbesondere über nicht mehr als 10% der axialen Länge des Grundkörpers (10) erstrecken.

6. Ultraschall-Schwinggebilde nach zumindest einem der vorstehenden Ansprüche,
**dadurch gekennzeichnet, dass**
eine ungerade Anzahl an Schlitzen vorgesehen ist.

7. Ultraschall-Schwinggebilde nach zumindest einem der vorstehenden Ansprüche,
**dadurch gekennzeichnet, dass**
in den Grundkörper (10) eine Sackbohrung (22) eingebracht ist, die sich axial bis in den Bereich der Schlitze erstreckt.

8. Ultraschall-Schwinggebilde nach zumindest einem der vorstehenden Ansprüche,
**dadurch gekennzeichnet, dass**
dieses eine Sonotrode (S), ein Amplitudentransformationsstück (A) oder ein Konverter (K) ist.

9. Ultraschall-Schweißvorrichtung, umfassend ein Ultraschall-Schwinggebilde (10) nach zumindest einem der vorstehenden Ansprüche.

10. Schweißanlage, umfassend einen Generator und eine Ultraschall-Schweißvorrichtung nach Anspruch 9.

## Claims

1. An ultrasonic oscillating unit (S, A, K) comprising a cylindrical base body (10) having a center axis (M) and a jacket surface (12) into which a plurality of slits (14 - 19) are introduced which extend obliquely to the center axis in a side view of the jacket surface, wherein the slits (14 - 19) extend so far in the radial direction of the base body (10) that they are in communication with one another and the slits (14 - 19) extend in a curved manner in the side view of the jacket surface (12),
**characterized in that**
the curvature is not constant and the curvature at the center of a slit (14 - 19) is larger than at the ends of the slit.

2. An ultrasonic oscillating unit in accordance with at least one of the preceding claims,
**characterized in that**
the base body (10) is a solid cylinder.

3. An ultrasonic oscillating unit in accordance with claim 2,
**characterized in that**
a contiguous hollow space is formed within the solid cylinder solely by the slits (14 - 19).

4. An ultrasonic oscillating unit in accordance with at least one of the preceding claims,
**characterized in that**
it has a reduced diameter at its upper and/or lower end(s).

5. An ultrasonic oscillating unit in accordance with at least one of the preceding claims,
**characterized in that**
the slits (14 - 19) extend in the axial direction over no more than 50%, in particular over 25 to 35%, in particular over approximately 5 to 25%, in particular over no more than 10%, of the axial length of the base body (10).

6. An ultrasonic oscillating unit in accordance with at least one of the preceding claims,
**characterized in that**
an odd number of slits is provided.

7. An ultrasonic oscillating unit in accordance with at least one of the preceding claims,
**characterized in that**
a blind bore (22) is introduced into the base body (10) and extends axially up to and into the region of the slits.

8. An ultrasonic oscillating unit in accordance with at least one of the preceding claims,
**characterized in that**
it is a sonotrode (S), an amplitude transformation piece (A) or a converter (K).

9. An ultrasonic welding apparatus comprising an ultrasonic oscillating unit (10) in accordance with at least one of the preceding claims.

10. A welding system comprising a generator and an ultrasonic welding apparatus in accordance with claim 9.

## Revendications

1. Structure vibrante à ultrasons (S, A, K), comprenant un corps de base cylindrique (10) ayant un axe central (M) et une surface enveloppe (12), corps dans lequel sont pratiquées plusieurs fentes (14 - 19) qui, en vue latérale sur la surface enveloppe, s'étendent en oblique par rapport à l'axe central, les fentes (14 - 19) s'étendant en direction radiale du corps de base (10) aussi loin qu'elles communiquent entre elles, et les fentes (14 - 19) s'étendant de manière courbée, en vue latérale sur la surface enveloppe (12),
**caractérisée en ce que**
la courbure n'est pas constante et est plus grande au centre d'une fente (14 -19) qu'aux extrémités de la fente.

2. Structure vibrante à ultrasons selon la revendication précédente,
**caractérisée en ce que**
le corps de base (10) est un cylindre plein.

3. Structure vibrante à ultrasons selon la revendication 2,
**caractérisée en ce que**
un espace creux continu à l'intérieur du cylindre plein est formé exclusivement par les fentes (14 - 19).

4. Structure vibrante à ultrasons selon l'une au moins des revendications précédentes,
**caractérisée en ce que**
celle-ci présente un diamètre réduit à son extrémité supérieure et/ou inférieure.

5. Structure vibrante à ultrasons selon l'une au moins des revendications précédentes,
**caractérisée en ce que**
les fentes (14 - 19) s'étendent dans la direction axiale sur pas plus de 50 %, en particulier sur 25 à 35 %, en particulier sur environ 5 à 25 %, en particulier sur pas plus de 10 % de la longueur axiale du corps de base (10).

6. Structure vibrante à ultrasons selon l'une au moins des revendications précédentes,
**caractérisée en ce que**
il est prévu un nombre impair de fentes.

7. Structure vibrante à ultrasons selon l'une au moins des revendications précédentes,
**caractérisée en ce que**
un trou borgne (22) est pratiqué dans le corps de base (10) et s'étend axialement jusque dans la zone des fentes.

8. Structure vibrante à ultrasons selon l'une au moins des revendications précédentes,
**caractérisée en ce que**
celle-ci est une sonotrode (S), une pièce de transformation d'amplitude (A) ou un convertisseur (K).

9. Dispositif de soudage par ultrasons comprenant une structure vibrante à ultrasons (10) selon l'une au moins des revendications précédentes.

10. Installation de soudage comprenant un générateur et un dispositif de soudage par ultrasons selon la revendication 9.
